# EUROPÄISCHE PATENTSCHRIFT

(11) **EP 2 174 748 B1**
(45) Veröffentlichungstag und Bekanntmachung des Hinweises auf die Patenterteilung: **29.06.2011**
(21) Anmeldenummer: 08017837.9
(22) Anmeldetag: 10.10.2008
(51) Int. Cl.: B23Q 11/00, B23Q 15/00

(54) **Werkzeugmaschine und Verfahren zur Dämpfung von Schwingbewegungen eines Maschinenelements einer Werkzeugmaschine**
Machine tool and method for dampening the oscillations of a machine element of a machine tool
Machine-outil et procédé d'amortissement d'oscillations d'un élément de machine d'une machine-outil

(43) Veröffentlichungstag der Anmeldung: 14.04.2010
(73) Patentinhaber: Siemens Aktiengesellschaft, 80333 München (DE)
(72) Erfinder: Hamann, Jens, 90765 Fürth (DE); Krejtschi, Jürgen, 90478 Nürnberg (DE); Schäfers, Elmar, 90763 Fürth (DE); Stoiber, Dietmar, 90763 Fürth (DE)

(56) Entgegenhaltungen:
- WO-A-98/30813
- DE-A1- 10 217 288
- DE-A1- 19 614 470
- US-B1- 6 272 763

## Beschreibung

Die Erfindung betrifft eine Werkzeugmaschine und ein Verfahren zur Dämpfung von Schwingbewegungen eines Maschinenelements einer Werkzeugmaschine.

Bei nicht direkt angetriebenen Maschinenelementen von Werkzeugmaschinen werden Schwingbewegungen der Maschinenelemente, insbesondere im Bereich der Eigenschwingungsfrequenzen des Antriebsstrangs, durch die Elastizität des Antriebstrangs, in Folge des eingesetzten Getriebes, verursacht. Durch den Einsatz eines Direktantriebs kann die Elastizität des Antriebstrangs stark verringert werden. Allerdings muss der Direktantrieb dann auch so ausgelegt werden, dass sämtliche Prozessanforderungen (Bearbeitungs- und Beschleunigungskräfte) erfüllt werden. In der Praxis ist dies bei Werkzeugmaschinen oft nicht möglich, da einerseits deutlich zu kostenintensiv und andererseits die erforderliche Anzahl der Direktantriebe die nötig wären, um die während eines Bearbeitungsvorgangs zum Verfahren des Maschinenelements notwendige, oft sehr hohe Kraft zu erzeugen, in Folge des hohen Platzbedarfs nicht in die Werkzeugmaschine integrierbar sind.

Bei handelsüblichen Werkzeugmaschinen resultieren hieraus Produktivitätseinbußen. So muss z.B. bei der Feinbearbeitung ein Maschinenelement, wie z.B. ein Maschinentisch, langsam verfahren werden um die notwendige hohe Präzision bei der Bearbeitung einzuhalten, und auftretende Schwingungen zu vermeiden. Weiterhin muss aber auch selbst bei einer Schlichtbearbeitung das Maschinenelement oft relativ langsam verfahren, werden, damit keine Eigenschwingungen angeregt werden.

Aus dem Stand der Technik sind verschiedene Möglichkeiten zur Schwingungsdämpfung bekannt, wie z.B. optimierte Vorgabe von Lagesollwerten, geeignete Parametrierung von Drehzahlreglern oder mittels Gegenschwinger. Nachteilig beim Stand der Technik ist, dass in vielen Anwendungsfällen, insbesondere wenn große Bearbeitungs- und Beschleunigungskräfte auftreten, die oben genannten Möglichkeiten oft unzureichend sind, so dass es zu den oben genannten Produktivitätseinbußen kommt.

Aus der DE 196 14 470 A1 ist ein Verfahren und eine Vorrichtung zur aktiven Dämpfung von Drehungleichförmigkeiten oder Schwingungen bei der spanenden Bearbeitung und beim Sägen fester Werkstoffe durch mit Hilfe eines Linearmotors gegenphasig aufgebrachte Momentenimpulse bekannt. Dabei werden Drehungleichförmigkeiten oder Schwingungen, die bei der spanenden Bearbeitung oder beim Sägen von Werkstücken durch unsymmetrische Momentenverteilungen um die Drehachse verfahrensbedingt entstehen, durch zeit- und phasengerichtete Gegenmomente aktiv gedämpft. Die Gegenmomente werden dabei mit Hilfe eines elektronisch angesteuerten Linearmotors aufgebracht.

Es ist Aufgabe der Erfindung Schwingbewegungen eines Maschinenelements einer Werkzeugmaschine zu dämpfen.

Die Aufgabe wird gelöst durch eine Werkzeugmaschine, wobei die Werkzeugmaschine ein Maschinenelement aufweist, das mittels eines ersten Motors in einer Verfahrrichtung über ein Getriebe verfahrbar ist, wobei die Werkzeugmaschine einen zweiten Motor aufweist, mittels dessen eine Kraft in Verfahrrichtung des Maschinenelements auf das Maschinenelement ausübbar ist, wobei der zweite Motor direkt ohne ein zwischen zweitem Motor und Maschinenelement zwischengeschaltetes Getriebe die Kraft auf das Maschinenelement ausübt, wobei der zweite Motor derart ansteuerbar ist, dass die von ihm erzeugte Kraft in Verfahrrichtung des Maschinenelements verlaufenden Schwingbewegungen des Maschinenelements entgegenwirkt, wobei der zweite Motor derart ansteuerbar ist, dass die von ihm erzeugte Kraft proportional zur Differenz von Sollgeschwindigkeit und Istgeschwindigkeit des Maschinenelements ist, wobei das Maschinenelement als Maschinentisch oder als Maschinenschlitten ausgebildet ist.

Weiterhin wird diese Aufgabe gelöst durch ein Verfahren zur Dämpfung von Schwingbewegungen eines Maschinenelements einer Werkzeugmaschine, wobei das Maschinenelement mittels eines ersten Motors in einer Verfahrrichtung verfahren wird, wobei mittels eines zweiten Motors eine Kraft in Verfahrrichtung des Maschinenelements auf das Maschinenelement ausgeübt wird, wobei vom zweiten Motor direkt ohne ein zwischen zweitem Motor und Maschinenelement zwischengeschaltetes Getriebe die Kraft auf das Maschinenelement ausgeübt wird, wobei der zweite Motor derart ansteuert wird, dass die von ihm erzeugte Kraft in Verfahrrichtung des Maschinenelements verlaufenden Schwingbewegungen des Maschinenelements entgegenwirkt, wobei der zweite Motor derart angesteuert wird, dass die von ihm erzeugte Kraft proportional zur Differenz von Sollgeschwindigkeit und Istgeschwindigkeit des Maschinenelements ist, wobei das Maschinenelement als Maschinentisch oder als Maschinenschlitten ausgebildet ist.

Vorteilhafte Ausbildungen der Erfindung ergeben sich aus den abhängigen Ansprüchen.

Vorteilhafte Ausbildungen des Verfahren ergeben sich analog zur vorteilhaften Ausbildung der Werkzeugmaschine und umgekehrt.

Es erweist sich als vorteilhaft, wenn der zweite Motor als Linearmotor oder als rotatorischer Motor ausgebildet ist. Ein Linearmotor oder ein rotatorischer Motor, der in Form eines Direktantriebs vorliegt, stellt eine übliche Ausbildung des zweiten Motors dar.

Ferner erweist es sich als vorteilhaft, wenn der rotatorische Motor als Torquemotor ausgebildet ist. Ein Torquemotor ermöglicht die Erzeugung eines hohen Drehmoments und somit einer hohen Kraft, welche auf das Maschinenelement einwirkt, was eine hohe Schwingungsdämpfung ermöglicht.

Ferner erweist sich die Erfindung bei Räummaschinen als vorteilhaft, da insbesondere bei diesem Typ von Werkzeugmaschinen hohe Bearbeitungs- und Beschleunigungskräfte auftreten. Zwei Ausführungsbeispiele der Erfindung sind in der Zeichnung dargestellt und werden im Folgenden näher erläutert. Dabei zeigen:
- FIG 1: eine schematisierte Darstellung eines ersten Ausfüh- rungsbeispiels einer erfindungsgemäßen Werkzeugmaschi- ne,
- FIG 2: ein Steuerungssystem zur Ansteuerung des ersten und zweiten Motors,
- FIG 3: eine schematisierte Darstellung eines zweiten Ausfüh- rungsbeispiels einer erfindungsgemäßen Werkzeugmaschine und.
- FIG 4: eine schematisierte Darstellung eines dritten Ausfüh- rungsbeispiels einer erfindungsgemäßen Werkzeugmaschi- ne, wobei die Werkzeugmaschine als Räummaschine ausge- bildet ist.

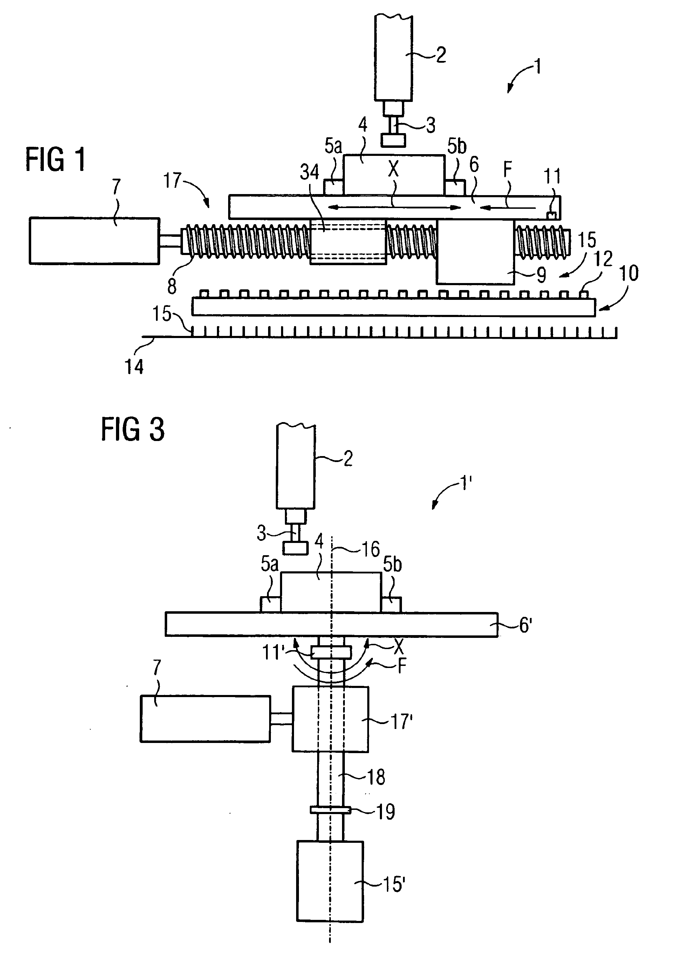

FIG 1 ist in Form einer schematisierten Darstellung ein erstes erfindungsgemäßes Ausführungsbeispiel einer Werkzeugmaschine 1 dargestellt, wobei in FIG 1 nur die zum Verständnis der Erfindung wesentlichen Komponenten der Werkzeugmaschine 1 dargestellt sind. Die Werkzeugmaschine 1 weist ein Maschinenelement 6 auf, das im Rahmen des Ausführungsbeispiels in Form eines Maschinentischs ausgebildet ist. Das Maschinenelement 6 wird von einem ersten Motor 7 angetrieben. Der erste Motor 7 treibt dabei rotierend eine Spindel 8 an, die ein entsprechendes Gewinde aufweist. Eine Spindelmutter 34, die ein zur zum Gewinde der Spindel passendes Gegengewinde aufweist, ist fest mit dem Maschinenelement 6 verbunden. Wenn sich der erste Motor 7 dreht und damit sich die Spindel 8 dreht, wird die Spindelmutter 34 und damit das Maschinenelement 6 in der Verfahrrichtung X, d.h. im Rahmen des Ausführungsbeispiels in waagerechter Richtung nach links oder nach rechts, je nach Drehrichtung des Motors 7, verfahren. Die Spindelmutter 34 und die Spindel 8 bilden zusammen ein Getriebe 17. Solchermaßen ist das Maschinenelement 6 mittels des ersten Motors 7 in der Verfahrrichtung X über das Getriebe 17 verfahrbar.

Auf dem Maschinenelement 6 ist ein Werkstück 4 mittels einer Werkstückhaltevorrichtung 5, die am Maschinenelement 6 befestigt ist, eingespannt. Ein dritter Motor 2, der im Rahmen des Ausführungsbeispiels in Form eines Werkzeugspindelmotors vorliegt, treibt rotierend ein Werkzeug 3 (z.B. ein Fräser) zur Bearbeitung des Werkstücks 4 an.

Ein Lagegeber 11 misst die Istlage xᵢₛₜ des Maschinenelements 6 in Bezug auf einen ortsfesten in FIG 1 schematisiert dargestellten Maßstab 14, der Inkremente aufweist, wobei der Übersichtlichkeit halber nur ein Inkrement 31 mit einem Bezugszeichen versehen ist. Wird nun das Maschinenelement 6 in Verfahrrichtung X verfahren, so treten, z.B. bei einer spannenden Bearbeitung, hohe Bearbeitungskräfte auf, die in Verfahrrichtung X wirken. Die entsprechend zum Verfahren des Maschinenelements 6 und damit des Werkstücks 4 notwendige hohe Kraft wird vom ersten Motor 7 über das Getriebe 17 erzeugt. Das Getriebe 17 ist notwendig, da nur über dieses die hohen Kräfte die zum Verfahren des Maschinenelements 6 während dem Bearbeitungsvorgang notwendig sind, wirtschaftlich aufgebracht werden können.

Nachteilig bei einem solchen Antriebsstrang ist es, dass z.B. in Folge des Gewindespiels zwischen dem Gewinde der Spindel und dem Innengewinde der Spindelmutter 34 dieses im Rahmen einer kleinen Wegstrecke leicht in Verfahrrichtung X hin- und herbewegbar ist, so dass Schwingbewegungen des Maschinenelements 6, insbesondere im Bereich der Eigenfrequenzen des Antriebsstrangs, auftreten.

Hier nun setzt die Erfindung an. Erfindungsgemäß weist die Werkzeugmaschine 1 einen Direktantrieb in Form eines zweiten Motors 15 auf. Der zweite Motor 15 ist im Rahmen dieses Ausführungsbeispiels in Form eines Linearmotors ausgebildet und besteht aus einem fest mit dem Maschinenelement 6 verbundenen Primärteil 9, dessen Spulen zur Erzeugung eines magnetischen Feldes entsprechend elektrisch angesteuert werden und einem ortsfesten Sekundärteil 10, der Permanentmagnete aufweist, wobei der Übersichtlichkeit halber in FIG 1 nur ein Permanentmagnet 11 mit einem Bezugszeichen versehen ist. Im Rahmen des Ausführungsbeispiels ist der Primärteil 9, in der Ansicht gemäß FIG 1, vor der Spindel 8 angeordnet.

Mittels des zweiten Motors 15 wird eine direkt auf das Maschinenelement 6 einwirkende Kraft F in Verfahrrichtung X des Maschinenelements 6 auf das Maschinenelement 6 ausgeübt. Wie schon gesagt, ist der zweite Motor 15 erfindungsgemäß als Direktantrieb ausgebildet, d.h. der zweite Motor 15 ist direkt ohne ein zwischen zweiten Motor 15 und dem Maschinenelement 6 zwischengeschaltetes Getriebe mit dem Maschinenelement 6 verbunden und übt somit, wie schon gesagt, direkt die Kraft F in Verfahrrichtung X des Maschinenelements auf das Maschinenelement 6 aus. Der zweite Motor 7 wird dabei derart über eine Regeleinheit angesteuert, dass die von ihm erzeugte Kraft F in Verfahrrichtung X des Maschinenelements 6 verlaufenden Schwingbewegungen des Maschinenelements 6 entgegenwirkt, d.h. wenn z.B. die Schwingbewegung gerade in X-Richtung von links nach rechts erfolgt, wird eine, entsprechend der eingezeichneten Pfeilrichtung der Kraft F, positive Kraft F erzeugt, die von rechts nach links der Bewegung entgegenwirkt und wenn z.B. die Schwingbewegung gerade in X-Richtung von rechts nach links erfolgt, wird eine, entsprechend der eingezeichneten Pfeilrichtung der Kraft F, negative Kraft F erzeugt, die von links nach rechts der Bewegung entgegenwirkt.

Der zweite Motor 15 muss erfindungsgemäß nicht die zum Verfahren des Maschinenelements 6 während des Bearbeitungsvorgangs notwendige hohe Verfahrkraft aufbringen, sondern muss lediglich die Kraft F aufwenden, um die Schwingbewegung des Maschinenelements 6 zu dämpfen.

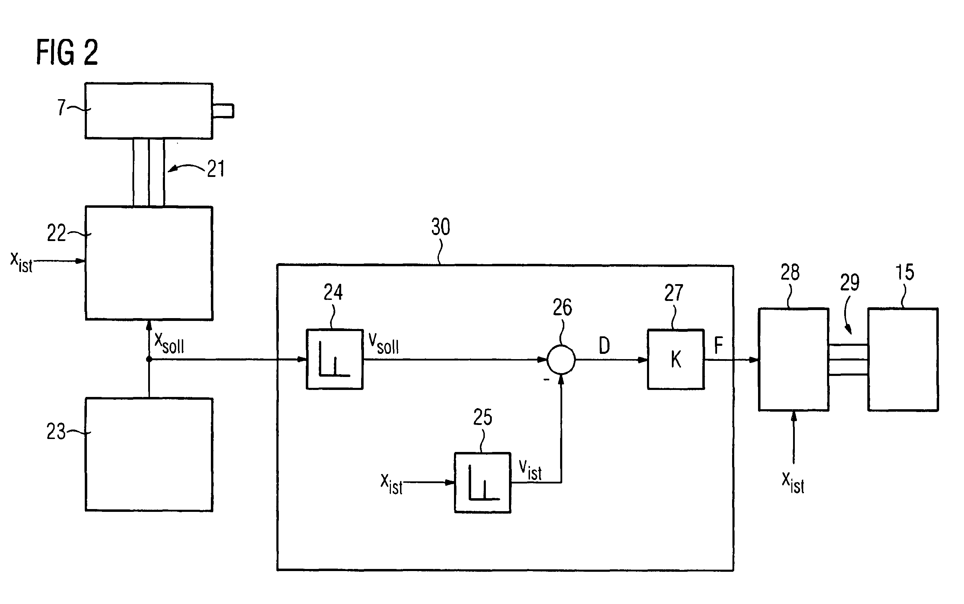

In FIG 2 ist ein zugehöriges Steuerungssystem zum Ansteuern des ersten Motors 7 und des zweiten Motors 15 dargestellt. Eine Steuereinheit 23 (z.B. numerische Steuerung der Werkzeugmaschine) erzeugt eine Solllage xₛₒₗₗ in Form von Lagesollwerten zur Ansteuerung des ersten Motors 7. Die Solllage xₛₒₗₗ wird an eine erste Antriebseinheit 22 als Eingangsgröße ausgegeben. Die erste Antriebseinheit 22 weist intern im Wesentlichen einen Stromrichter sowie Regelungsfunktionalitäten auf. Die erste Antriebseinheit 22 ist über elektrische Leitungen 21, zur Ansteuerung des ersten Motors 7, mit dem ersten Motor 7 verbunden. Zur Regelung der Lage des Maschinenelements 6 erhält die Antriebseinheit 22 als Regelisteingangsgröße die vom Lagegeber 11 gemessene Istlage xᵢₛₜ des Maschinenelements 6 in Form von Lageistwerten. Das Maschinenelement 6 wird dann entsprechend der von der Steuereinheit 23 vorgegebenen Solllage xₛₒₗₗ auf die Solllage xₛₒₗₗ in Verfahrrichtung X verfahren.

Weiterhin weist das Steuersystem eine Regeleinheit 30 auf, die zur Berechnung des Differentialquotienten nach der Zeit t zwei Differentialquotientenberechnungsfunktionsbausteine 24 und 25, einen Subtrahierer 26 und einen Regler 27 aufweist. Die Solllage xₛₒₗₗ wird von der Steuereinheit 23 an den Differentialquotientenberechungsfunktionsbaustein 24 ausgegeben, der durch Ableitung nach der Zeit t eine Sollgeschwindigkeit vₛₒₗₗ aus der Solllage xₛₒₗₗ berechnet und ausgangsseitig ausgibt. Mittels des Differentialquotientenfunktionsberechnungsbausteins 25 wird mittels Ableitung nach der Zeit t aus der von dem Lagegeber 11 gemessenen Istlage xᵢₛₜ eine Istgeschwindigkeit vᵢₛₜ berechnet. Anschließend wird mittels des Subtrahierers 26 die Differenz D von Sollgeschwindigkeit vₛₒₗₗ und Istgeschwindigkeit vᵢₛₜ berechnet und als Eingangsgröße dem Regler 27, der im Rahmen des Ausführungsbeispiels als Proportionalregler ausgebildet, zugeführt. Der Regler 27 ermittelt die Kraft F, welche vom zweiten Motor 15 zur Dämpfung der Schwingbewegungen des Maschinenelements 6 ausgeübt werden soll, durch Multiplikation der Differenz D mit einem Faktor K und gibt die Kraft F an eine zweite Antriebseinheit 28 als Eingangsgröße aus. Die zweite Antriebseinheit 28 ist über elektrische Leitungen 29 mit dem zweiten Motor 15 der Werkzeugmaschine 1 verbunden. Die zweite Antriebseinheit 28 erzeugt entsprechend der vom Regler 27 vorgegebenen Kraft F und der Istlage xᵢₛₜ derart elektrische Ausgangsspannungen auf den Leitungen 29, dass der zweite Motor 15 die Kraft F erzeugt und auf das Maschinenelement 6 ausübt.

FIG 3 ist in Form einer schematisierten Darstellung ein weiteres Ausführungsbeispiel in Form der Werkzeugmaschine 1' dargestellt. Die in FIG 3 dargestellte Ausführungsform entspricht im Grundaufbau im Wesentlichen der vorstehend in FIG 1 beschriebenen Ausführungsform. Gleiche Elemente sind daher in FIG 3 mit den gleichen Bezugszeichen versehen wie in FIG 1. Der wesentliche Unterschied gegenüber der Ausführungsform gemäß FIG 1 besteht darin, dass bei der Ausführungsform gemäß FIG 3 das Maschinenelement 6' als Maschinentisch, in Form eines sogenannten Rundtisches, welcher um die Drehachse 16 in X-Richtung drehbar verfahrbar ist. Im Unterschied zum Ausführungsbeispiel gemäß FIG 1 ist die Verfahrrichtung X somit nicht wie bei FIG 1 translatorisch sondern rotatorisch. Der Lagegeber 11' misst die Istlage, d.h. den Drehwinkel des Maschinenelements 6'. Der erste Motor 7 treibt über ein Getriebe 17', das eine Antriebswelle 18 antreibt, rotatorisch das Maschinenelement 6' an. Die Antriebswelle 18 ist fest mit dem Maschinenelement 6 verbunden. Weiterhin ist die Antriebswelle 18 über eine Schraubverbindung 19 mit dem zweiten Motor 15', der im Rahmen dieses Ausführungsbeispiels als rotatorischer Motor, insbesondere als sogenannter Torquemotor ausgebildet ist, verbunden. Das Maschinenelement 6' ist mittels des ersten Motors 7 in der Verfahrrichtung X über das Getriebe 17' verfahrbar. Der zweite Motor 15' übt die Kraft F in Verfahrrichtung X, die im Rahmen dieses Ausführungsbeispiels eine rotatorisch ist, auf das Maschinenelement aus. Der zweite Motor 15' übt somit, wie beim Ausführungsbeispiel gemäß FIG 1, direkt ohne ein zwischen zweiten Motor 15' und Maschinenelement 6' zwischengeschaltetes Getriebe die Kraft F auf das Maschinenelement 6'aus.

Die Ansteuerung des zweiten Motors 15' gemäß FIG 3 erfolgt in analoger Weise über das in FIG 2 dargestellte und beschriebene Steuerungssystem. Ansonsten entspricht die Funktionsweise der Ausführungsform gemäß FIG 3 der Funktionsweise der Ausführungsform gemäß FIG 1.

Es sei an dieser Stelle angemerkt, dass durch die erzielte Schwingungsdämpfung mittels der Erfindung auch eine Verschleißreduktion der Werkzeugmaschine erzielt wird.

Ferner sei an dieser Stelle angemerkt, dass selbstverständlich das Maschinenelement nicht unbedingt, wie in den Ausführungsbeispielen als Maschinentisch ausgebildet sein muss, sondern in Form eines beliebigen Maschinenelements der Werkzeugmaschine vorliegen kann. So kann das Maschinenelement z.B. auch in Form des dritten Motors 2 vorliegen, der in analoger Weise mittels des beschriebenen Antriebssystems verfahren werden kann und dessen Schwingbewegungen gedämpft werden können oder z.B. auch in Form eines verfahrbaren Maschinenschlittens vorliegen, der in analoger Weise mittels des beschriebenen Antriebssystems verfahren werden kann und dessen Schwingbewegungen gedämpft werden können.

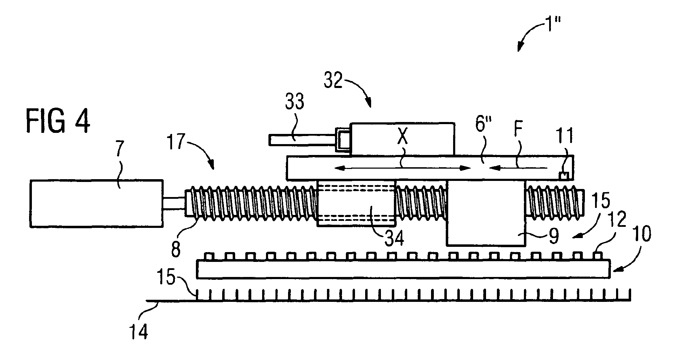

In FIG 4 ist in Form einer schematisierten Darstellung eine als Räummaschine 1 " ausgebildete Werkzeugmaschine dargestellt, wobei nur die zum Verständnis der Erfindung wesentlichen Komponenten dargestellt sind. Die in FIG 4 dargestellte Ausführungsform entspricht im Grundaufbau im Wesentlichen der vorstehend in FIG 1 beschriebenen Ausführungsform. Gleiche Elemente sind daher in FIG 4 mit den gleichen Bezugszeichen versehen wie in FIG 1. Der wesentliche Unterschied gegenüber der Ausführungsform gemäß FIG 1 besteht darin, dass bei der Ausführungsform gemäß FIG 4 das Maschinenelement 6 " als verfahrbarer Maschinenschlitten ausgebildet ist an dem eine Werkzeughaltevorrichtung 32 befestigt ist. In die Werkzeughaltevorrichtung ist ein Räumwerkzeug 33, das z.B. in Form einer Räumnadel vorliegen kann, eingespannt. Mit Hilfe des Räumwerkzeugs 33 wird ein in der Abbildung 4 der Übersichtlichkeit halber nicht mehr dargestelltes Werkstück geräumt. Von der Funktionsweise entspricht ansonsten die Ausführungsform gemäß FIG 4 der Ausführungsform gemäß FIG 1.

Weiterhin sei an dieser Stelle erwähnt, dass es auch möglich ist eine Dämpfung der Schwingbewegungen der Maschinenkomponente 6 zu erzielen indem die Schwingbewegungen mittels einer Wirbelstrombremse passiv gedämpft werden. Hierzu kann z.B. der Primärteil 9 mit Kupfer ausgegossen und somit kurzgeschlossen werden. In Verbindung mit dem Sekundärteil 10 entsteht somit eine passiv arbeitende Wirbelstrombremse. Diese Lösung weist gegenüber der erfindungsgemäßen Lösung den Nachteil auf, dass die realisierbare Dämpfung deutlich geringer ist und die Dämpfung nach Einbau der Wirbelstrombremse nicht verstellbar ist.

## Patentansprüche

1. Werkzeugmaschine, wobei die Werkzeugmaschine (1,1') ein Maschinenelement (6,6') aufweist, das mittels eines ersten Motors (7) in einer Verfahrrichtung (X) über ein Getriebe (17,17') verfahrbar ist, wobei die Werkzeugmaschine (1,1') einen zweiten Motor (15,15') aufweist, mittels dessen eine Kraft (F) in Verfahrrichtung (X) des Maschinenelements auf das Maschinenelement (6,6') ausübbar ist, wobei der zweite Motor (15,15') direkt ohne ein zwischen zweitem Motor (15,15') und Maschinenelement (6,6') zwischengeschaltetes Getriebe die Kraft (F) auf das Maschinenelement (6,6') ausübt, wobei der zweite Motor (15,15') derart ansteuerbar ist, dass die von ihm erzeugte Kraft (F) in Verfahrrichtung des Maschinenelements (6,6') verlaufenden Schwingbewegungen des Maschinenelements (6,6') entgegenwirkt, wobei der zweite Motor (15,15') derart ansteuerbar ist, dass die von ihm erzeugte Kraft (F) proportional zur Differenz (D) von Sollgeschwindigkeit (vₛₒₗₗ) und Istgeschwindigkeit (vᵢₛₜ) des Maschinenelements (6,6') ist, wobei das Maschinenelement als Maschinentisch (6,6') oder als Maschinenschlitten (6") ausgebildet ist.

2. Werkzeugmaschine nach Anspruch 1, **dadurch gekennzeichnet, dass** der zweite Motor (15,15') als Linearmotor oder als rotatorischer Motor ausgebildet ist.

3. Werkzeugmaschine nach Anspruch 2, **dadurch gekennzeichnet dass** der rotatorische Motor (15') als Torquemotor ausgebildet ist.

4. Werkzeugmaschine nach einem der vorhergehenden Ansprüche, **dadurch gekennzeichnet, dass** die Werkzeugmaschine als Räummaschine (1") ausgebildet ist.

5. Verfahren zur Dämpfung von Schwingbewegungen eines Maschinenelements (6,6') einer Werkzeugmaschine (1,1'), wobei das Maschinenelement (6,6') mittels eines ersten Motors (7) in einer Verfahrrichtung (X) verfahren wird, wobei mittels eines zweiten Motors (15,15') eine Kraft (F) in Verfahrrichtung (X) des Maschinenelements (6,6') auf das Maschinenelement (6,6') ausgeübt wird, wobei vom zweiten Motor (15,15') direkt ohne ein zwischen zweitem Motor (15,15') und Maschinenelement (6,6') zwischengeschaltetes Getriebe die Kraft auf das Maschinenelement (6,6') ausgeübt wird, wobei der zweite Motor (15,15') derart ansteuert wird, dass die von ihm erzeugte Kraft (F) in Verfahrrichtung (X) des Maschinenelements (6,6') verlaufenden Schwingbewegungen des Maschinenelements (6,6') entgegenwirkt, wobei der zweite Motor (15, 15') derart angesteuert wird, dass die von ihm erzeugte Kraft (F) proportional zur Differenz (D) von Sollgeschwindigkeit (vₛₒₗₗ) und Istgeschwindigkeit (vᵢₛₜ) des Maschinenelements (6, 6') ist, wobei das Maschinenelement als Maschinentisch (6, 6') oder als Maschinenschlitten (6") ausgebildet ist.

## Claims

1. Machine tool, the machine tool (1, 1') having a machine element (6, 6') which can be moved in a direction of movement (X) via a gear (17, 17') by means of a first motor (7), the machine tool (1, 1') having a second motor (15, 15'), by means of which a force (F) can be exerted upon the machine element (6, 6') in the direction of movement (X) of the machine element, the second motor (15, 15') exerting the force (F) upon the machine element (6, 6') without a gear interposed between the second motor (15, 15') and machine element (6, 6'), the second motor (15, 15') being activatable in such a way that the force (F) generated by it counteracts oscillatory movements of the machine element (6, 6') which run in the direction of movement of the machine element (6, 6'), the second motor (15, 15') being activatable in such a way that the force (F) generated by it is proportional to the difference (D) between the desired speed (V_{des}) and actual speed (V_{act}) of the machine element (6, 6'), the machine element being designed as a machine table (6, 6') or as a machine slide (6'').

2. Machine tool according to Claim 1, **characterized in that** the second motor (15, 15') is designed as a linear motor or as a rotary motor.

3. Machine tool according to Claim 2, **characterized in that** the rotary motor (15') is designed as a torque motor.

4. Machine tool according to one of the preceding Claims, **characterized in that** the machine tool is designed as a broaching machine (1'').

5. Method for the damping of oscillatory movements of a machine element (6, 6') of a machine tool (1, 1'), the machine element (6, 6') being moved in a direction of movement (X) by means of a first motor (7), a force (F) being exerted upon the machine element (6, 6') in the direction of movement (X) of the machine element (6, 6') by means of a second motor (15, 15'), the force being exerted upon the machine element (6, 6') by the second motor (15, 15') directly without a gear interposed between the second motor (15, 15') and the machine element (6, 6'), the second motor (15, 15') being activated in such a way that the force (F) generated by it counteracts oscillatory movements of the machine element (6, 6') which run in the direction of movement (X) of the machine element (6, 6'), the second motor (15, 15') being activated in such a way that the force (F) generated by it is proportional to the difference (D) between the desired speed (V_{des}) and actual speed (V_{act}) of the machine element (6, 6'), the machine element being designed as a machine table (6, 6') or as a machine slide (6").

## Revendications

1. Machine-outil dans laquelle la machine ( 1, 1' ) outil a un élément ( 6, 6' ) de machine qui peut être déplacé par une transmission ( 17, 17' ) dans une direction ( X ) de déplacement au moyen d'un premier moteur ( 7 ), la machine (1, 1') outil ayant un deuxième moteur ( 15, 15' ) au moyen duquel une force ( F ) peut être appliquée 0 l'élément (6, 6') de machine dans la direction ( X ) de déplacement de l'élément de machine, le deuxième moteur ( 15, 15' ) appliquant la force à l'élément ( 6, 6' ) de machine directement sans une transmission montée intermédiairement entre le deuxième moteur ( 15, 15' ) et l'élément ( 6, 6' ) de machine, le deuxième moteur ( 15, 15' ) pouvant être commandé de manière à ce que la force ( F ) qu'il produit s'oppose à des mouvements d'oscillation de l'élément ( 6' ) de la machine s'étendant dans la direction de déplacement de l'élément ( 6, 6' ) de la machine, le deuxième moteur ( 15, 15') pouvant être commandé de manière à ce que la force qu'il produit soit proportionnelle à des différences ( D ) entre la vitesse ( Vₛₒₗₗ ) de consigne et la vitesse ( Vᵢₛₜ ) réelle de l'élément ( 6, 6' ), l'élément de la machine étant constitué sous la forme d'une table ( 6, 6' ) de machine ou sous la forme d'un chariot ( 6" ) de machine.

2. Machine-outil suivant la revendication 1, **caractérisée en ce que** le deuxième moteur ( 15, 15' ) est constitué sous la forme d'un moteur linéaire ou sous la forme d'un moteur rotatif.

3. Machine-outil suivant la revendication 2, **caractérisée en ce que** le moteur ( 15' ) rotatif est constitué sous la forme d'un moteur à couple.

4. Machine-outil suivant l'une des revendications précédentes, **caractérisée en ce que** la machine-outil est constituée sous la forme d'une machine ( 1" ) à brocher.

5. Procédé d'amortissement de mouvement d'oscillation d'un élément ( 6, 6" ) de machine d'une machine ( 1, 1" ) outil dans lequel, on déplace les éléments ( 6, 6" ) de la machine au moyen d'un premier moteur ( 7 ) suivant une direction ( X ) de déplacement dans lequel on applique, à l'élément (6, 6') de la machine au moyen d'un deuxième moteur (15, 15'), une force ( F ) dans la direction ( X ) de déplacement de l'élément (6, 6') de la machine, on applique la force à l'élément ( 6, 6' ) de la machine par le deuxième moteur ( 15, 15' ) directement sans une transmission montée intermédiairement entre le deuxième moteur ( 15, 15' ) et l'élément ( 6, 6' ) de la machine, on commande le deuxième moteur ( 15, 15' ) de manière à ce que la force ( F ) qu'il produit s'oppose à des mouvements d'oscillation de l'élément ( 6, 6' ) de la machine s'étendant dans la direction ( X ) de déplacement de l'élément ( 6, 6' ) de la machine, on commande le deuxième moteur ( 15, 15' ) de manière à ce que la force ( F ) qu'il produit soit proportionnelle à la différence ( D ) entre la vitesse (Vₛₒₗₗ) de consigne et la vitesse ( Vᵢₛₜ ) réelle de l'élément ( 6, 6' ) de la machine, l'élément de la machine étant constitué sous la forme d'une table ( 6, 6' ) de machine ou d'un chariot ( 6" ) de machine.
